# EUROPÄISCHE PATENTSCHRIFT

(11) **EP 1 263 184 B1**
(45) Veröffentlichungstag und Bekanntmachung des Hinweises auf die Patenterteilung: **26.07.2006**
(21) Anmeldenummer: 02009448.8
(22) Anmeldetag: 25.04.2002
(51) Int. Cl.: H04L 29/06, H04N 7/173, H04N 5/445, G06Q 30/00, A63F 13/12

(54) **Datenkommunikationssystem und Datenkommunikationsverfahren zur Auswahl bestimmter Benutzer**
Data communications system and data communications method for selecting certain users
Système de communications de données et procédé de communications de données pour sélectionner certains utilisateurs

(30) Priorität: 23.05.2001 DE 10125333
(43) Veröffentlichungstag der Anmeldung: 04.12.2002
(73) Patentinhaber: Simon Andreas, 81679 München (DE); Jerabek, Axel, 80337 München (DE); von Richthofen, Oswald, 81675 München (DE)
(72) Erfinder: Simon, Andreas, 81679 München (DE); Jerabek, Axel, 80337 München (DE)
(74) Vertreter: Jehle, Volker Armin

(56) Entgegenhaltungen:
- EP-A- 0 620 688
- WO-A-01/15450
- US-A- 5 791 991
- HARTWIG S ET AL: "MOBILE MULTIMEDIA - CHALLENGES AND OPPORTUNITIES INVITED PAPER" IEEE TRANSACTIONS ON CONSUMER ELECTRONICS, IEEE INC. NEW YORK, US, Bd. 4, November 2000 (2000-11), Seiten 1167-1178, XP001100008 ISSN: 0098-3063

## Beschreibung

Die Erfindung betrifft ein Datenkommunikationssystem gemäß Oberbegriff des Anspruchs 1, ein Datenkommunikationsverfahren gemäß Oberbegriff des Anspruchs 4.

Im Stand der Technik sind Datenkommunikationssysteme bekannt, die eine Vielzahl von Ausgabeeinrichtungen, z.B. Fernsehapparate aufweisen. Die Fernsehapparate empfangen Ton-/Bilddaten, die z.B. von einer Zentralstation einer privaten oder öffentlichen Fernsehanstalt ausgesendet werden. Am Bildschirm des jeweiligen Fernsehapparats werden die den Bilddaten entsprechenden Bilder angezeigt; außerdem strahlt (strahlen) der (die) jeweilige(n) Fernsehapparat-Lautsprecher die den Tondaten entsprechenden Tonsignale aus.

Das von der jeweiligen Zentralstation ausgesendete Fernsehprogramm enthält üblicherweise - neben den eigentlichen Unterhaltungs- und Informationssendungen - auch Werbesendungen. Jede Werbesendung besteht i.a. aus mehreren, z.B. fünf, sechs oder sieben einzelnen Werbespots, in denen jeweils ein bestimmtes Produkt oder eine bestimmte Dienstleistung beworben wird.

WO-A-0115450 discloses a method and a system for providing a user interface to real time interactive video services. The method and system allow interactive input from a viewer of the video services simultaneously with viewing the video services. The method and system also allows an interactive response to the viewer from the interactive application.
A user may log in on a betting server and defines his layout preferences (style sheet) of the betting page. He can choose among several events to bet on, or alternatively the system can make suggestions based on his betting history.

EP-A-0620688 discloses a CATV gaming system including a CATV network having a multiplicity of subscriber units each including a television, receiving apparatus for receiving gaming inputs from the multiplicity of subscriber units, transmitting apparatus for transmitting to the multiplicity of subscriber units information relating to gaming results and accounting apparatus for settling gaming debts and winnings via the CATV network. Other services, such as shopping may be provided.

Bei herkömmlichen Programmen schenkt der Zuschauer den einzelnen Werbespots i.a. nur geringe Aufmerksamkeit. Häufig ist das Interesse so gering, dass der Zuschauer während der Ausstrahlung einer Werbesendung das Programm wechselt, das Zimmer verlässt, eine Unterhaltung beginnt, etc.

Die Erfindung hat zur Aufgabe, ein neuartiges Datenkommunikationssystem, ein neuartiges Datenkommunikationsverfahren, sowie eine neuartige Vorrichtung zur Verwendung in einem Datenkommunikationssystem zur Verfügung zu stellen. Sie erreicht dieses und weitere Ziele durch die Gegenstände der Ansprüche 1 und 4. Vorteilhafte Weiterbildungen der Erfindung sind in den Unteransprüchen angegeben.

Gemäß der Erfindung wird ein Datenkommunikationssystem bzw. ein Datenkommunikations verfahren bereitgestellt, wie in den Ansprüchen 1 und 4 spezifiziert.

An den jeweils ausgewählten Nutzer (bzw. die ausgewählte Teilmenge von Nutzern) wird vorteilhaft eine Gewinnprämie ausgezahlt. Hierdurch wird für die Nutzer des Datenkommunikationssystems der Anreiz erhöht, sich die o.g. (Werbe)Inforrnationen anzusehen und/oder anzuhören.

Vorzugsweise weist das Datenkommunikationssystem mindestens 1.000, insbesondere mehr als 10.000 oder 100.000 Aus- und/oder Eingabeeinrichtungen auf.

Vorteilhaft werden die Informationen, insbesondere die Werbeinformationen - unabhängig von den weiteren Informationen - von einer (separaten) Zentralstation ausgesendet

Bevorzugt sind die Eingabeeinrichtungen Mobiltelefone. Diese können zugleich auch als Ausgabeeinrichtungen bzw. weitere Ausgabeeinrichtungen verwendet werden.

Vorzugsweise sind die Ausgabeeinrichtungen Fernsehapparate oder Computer, und/oder die weiteren Ausgabeeinrichtungen Mobiltelefone.

Die Erfindung wird nun durch mehrere Ausführungsbeispiele sowie die beigefügte Zeichnung näher erläutert. In der Zeichnung zeigt:
- Fig. 1: ein Datenkommunikationssystem gemäß einem ersten Ausführungsbeispiel der vorliegenden Erfindung;
- Fig. 2: eine Detaildarstellung einer der in Fig. 1 gezeigten Anzeige-/Eingabevorrichtungen;
- Fig. 3: eine im in Fig. 1 gezeigten Zentralrechner abgespeicherte Zuordnungstabelle;
- Fig. 4a: eine weitere im in Fig. 1 gezeigten Zentralrechner (für einen ersten Nutzer) abgespeicherte Tabelle;
- Fig. 4b: eine im in Fig. 1 gezeigten Zentralrechner abgespeicherte Auswertungstabelle;
- Fig. 4c: eine weitere im in Fig. 1 gezeigten Zentralrechner (für einen zweiten Nutzer) abgespeicherte Tabelle;
- Fig. 4d: eine weitere im in Fig. 1 gezeigten Zentralrechner (für einen weiteren Nutzer) abgespeicherte Tabelle;
- Fig. 4e: eine weitere im in Fig. 1 gezeigten Zentralrechner abgespeicherte Auswertungstabelle;
- Fig. 5: ein Datenkommunikationssystem gemäß einem zweiten Ausführungsbeispiel der vorliegenden Erfindung;
- Fig. 6a: eine Detaildarstellung eines der in Fig. 5 gezeigten Mobiltelefone;
- Fig. 6b: eine Detaildarstellung einer der in Fig. 5 gezeigten Rechner;
- Fig. 7: eine im in Fig. 5 gezeigten Zentralrechner abgespeicherte Zuordnungstabelle;
- Fig. 8a: eine weitere im in Fig. 5 gezeigten Zentralrechner abgespeicherte Tabelle;
- Fig. 8b: eine im in Fig. 5 gezeigten Zentralrechner abgespeicherte Auswertungstabelle;
- Fig. 8c: eine weitere im in Fig. 5 gezeigten Zentralrechner (für einen zweiten Nutzer) abgespeicherte Tabelle;
- Fig. 8d: eine weitere im in Fig. 5 gezeigten Zentralrechner (für einen weiteren Nutzer) abgespeicherte Tabelle;
- Fig. 8e: eine weitere im in Fig. 5 gezeigten Zentralrechner abgespeicherte Auswertungstabelle.

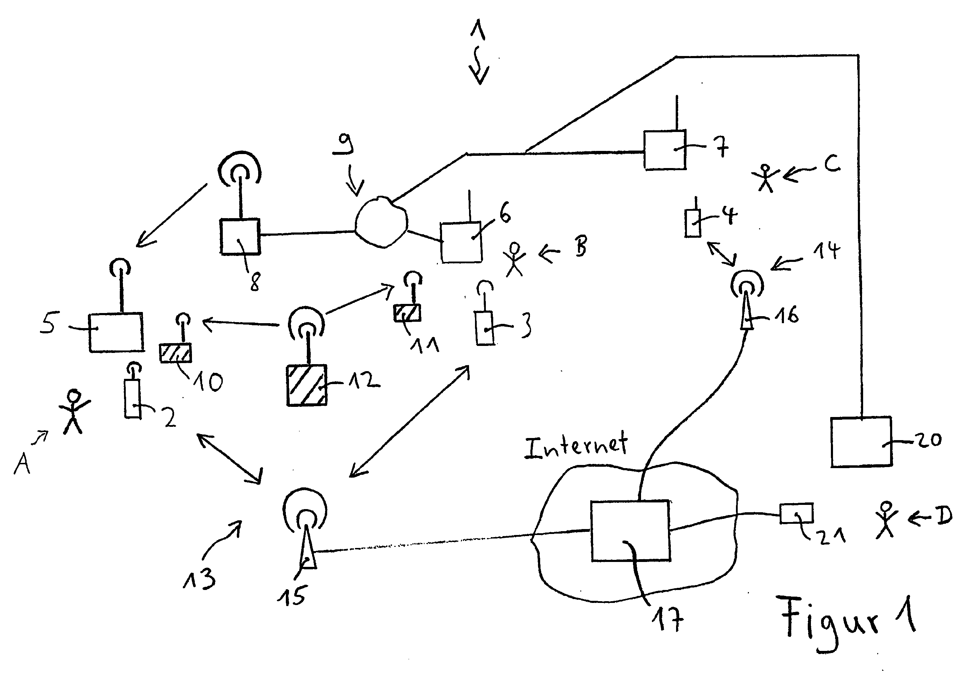

Gemäß Fig. 1 weist ein erfindungsgemäßes Datenkommunikationssystem 1 eine Vielzahl von Anzeige-/Eingabevorrichtungen, hier: ein erstes Mobiltelefon 2, eine zweites Mobiltelefon 3, ein drittes Mobiltelefon 4, sowie eine Vielzahl weiterer (z.B. mehr als 1000, insbesondere mehr als 10.000 oder mehr als 100.000), hier nicht dargestellter Mobiltelefone auf, sowie einen ersten Fernsehapparat 5, einen zweiten Fernsehapparat 6, einen dritten Fernsehapparat 7, sowie eine Vielzahl weiterer, hier nicht dargestellter Fernsehapparate.

Die Fernsehapparate 5, 6, 7 empfangen Ton-/Bilddaten, die - entsprechend einer bestimmten Femseh-Übemagungsnorm (z.B. PAL, NTSC, SECAM, D2-MAC, etc.) - von einer Zentralstation 8 einer privaten oder öffentlichen Fernsehanstalt ausgesendet werden. Die Daten können z.B. über ein Kabelnetz 9, oder z.B. drahtlos - alternativ unter zusätzlicher Zwischenschaltung von Satelliten - an die jeweiligen Fernsehapparate 5, 6, 7 übertragen werden. Am Bildschirm des jeweiligen Fernsehapparats werden die den Bilddaten entsprechenden Bilder angezeigt; außerdem strahlt (strahlen) der (die) jeweilige(n) Fernsehapparat-Lautsprecher die den Tondaten entsprechenden Tonsignale aus.

Alternativ oder zusätzlich zu den Fernsehapparaten 5, 6, 7 kann das Datenkommunikationssystem 1 eine Vielzahl von Radio-Empfangsapparaten 10, 11 aufweisen, die von einer Zentralstation 12 einer privaten oder öffentlichen Radio-Sendeanstalt ausgestrahlte Audiodaten empfangen, und den Audiodaten entsprechende Schallsignale aussenden.

Das von den Zentralstationen 8, 11 der jeweiligen Fernseh- oder Radio-Sendanstalt ausgesendete Fernseh- oder Radioprogramm enthält üblicherweise - neben den eigentlichen Unterhaltungs- und Informationssendungen - auch herkömmliche Werbesendungen. Jede Werbesendung besteht i.a. aus mehreren, z.B. fünf, sechs oder sieben einzelnen Werbespots, in denen jeweils ein bestimmtes Produkt oder eine bestimmte Dienstleistung beworben wird.

Die an den Bildschirmen der Fernsehapparate 5, 6, 7 dargestellten Werbespot-Bilder, und die zugehörigen, von den Fernsehapparat-Lautsprechern ausgestrahlten Werbespot-Texte können von Datenkommunikationssystem-Nutzern A, B, C betrachtet bzw. angehört werden. Alternativ oder zusätzlich können Werbespot-Texte von den Nutzern A, B, C auch an den o.g. Radio-Empfangsapparaten 10, 11 angehört werden.

Jedem Nutzer A, B, C ist eines der o.g. Anzeige-/Eingabevorrichtungen, hier: eines der o.g. Mobiltelefone 2, 3, 4 zugeordnet. Die Mobiltelefone 2, 3, 4 sind WAP- bzw. Internetfähig. Alternativ können z.B. herkömmliche GSM-Mobiltelefone eingesetzt werden, wobei die Datenübertragung statt wie unten erläutert über das Internet z.B. via SMS erfolgt.

Die Mobiltelefone 2, 3, 4 sind über Mobilfunknetz-Basisstationen 15, 16 an entsprechende Mobilfunknetze 13, 14 angeschlossen, und führen mit den jeweiligen Basisstationen des Mobilfunkenetzes 13, 14, z.B. unter Verwendung des WAP-, GPRS- oder UMTS-Protokolls, eine bidirektionale Datenkommunikation durch. Von der jeweiligen Basisstation 13, 14 aus werden die Daten - unter Zwischenschaltung einer oder mehrerer zentraler Rechner, z.B. von Telefonverbinduags Vermittlungsrechnern - an das Internet, und von dort aus an einen Internet-Zentralrechner 17 übertragen. Dieser sendet die von einem bestimmten Mobiltelefon 2, 3, 4 aus angefragte WAP- oder Internetseite (bzw. die von diesem aus angeforderten Bilddaten (oder Bild-/Tondaten)) über das Internet, die o.g. zentralen Rechner und die Mobilfunknetz-Basisstationen 15, 16 an das jeweils anfragende Mobiltelefon 2, 3, 4.

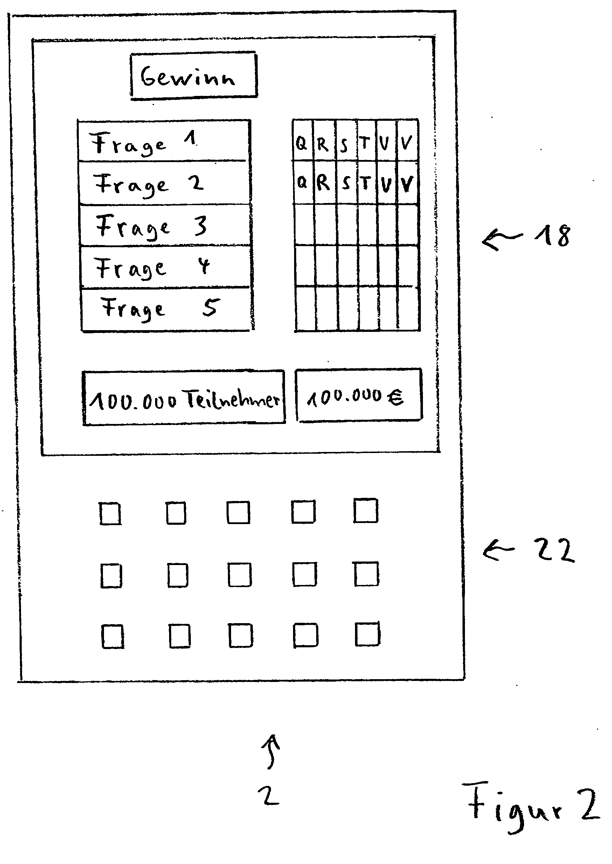

Gemäß Figur 2 weist jedes Mobiltelefon 2 eine Anzeigeeinrichtung (hier: ein Display 18), und eine Eingabeeinrichtung (hier: eine Tastatur 22) auf.

Am Display 18 des jeweiligen Mobiltelefons 2 werden - den vom Zentralrechner 17 ausgesendeten Bilddaten entsprechende - Bilder angezeigt (zusätzlich kann am Mobiltelefon 2 ein Lautsprecher vorgesehen sein, der - den vom Zentralrechner 17 ausgesendeten Tondaten entsprechende - Tonsignale ausstrahlt). Die am Display 18 dargestellten Bilder (und ggf. die vom Lautsprecher ausgestrahlten Tonsignale) können vom jeweiligen Datenkommunikationssystem-Nutzer (hier z.B. dem Nutzer A) betrachtet (bzw. angehört) werden.

Wie in Figur 2 dargestellt ist, werden - veranlasst durch den Zentralrechner 17 - am Display 18 des Mobiltelefons 2 auf die jeweilige am Fernseh- oder Radioempfangsapparat 5, 10 gezeigte Werbesendung bzw. auf den dort gezeigten Werbespot (d.h. auf die vom Fernseh- oder Radioempfangsapparat von der Zentralstation 8, 12 empfangenen Ton-/Bild- bzw. Tondaten)) bezogene Daten angezeigt (bzw. ggf. von dessen Lautsprecher ausgestrahlt), insbesondere Text- und/oder Sprachnachrichten. Hierbei kann es sich z.B. um an den jeweiligen Nutzer A gerichtete Fragen zu den einzelnen Werbespots (hier: die Fragen 1, 2, 3, 4, 5) handeln.

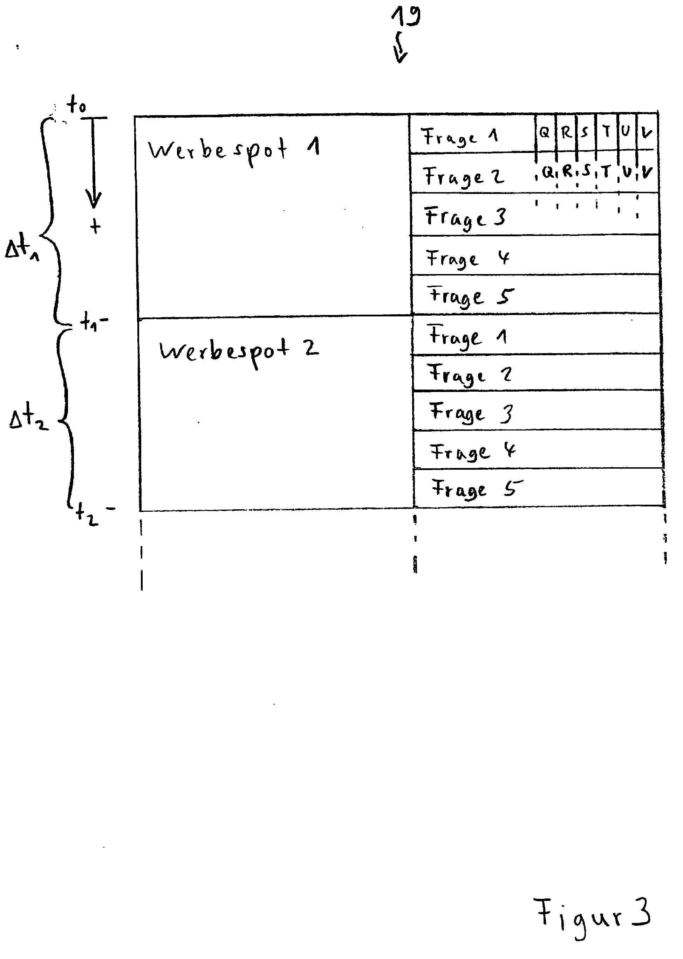

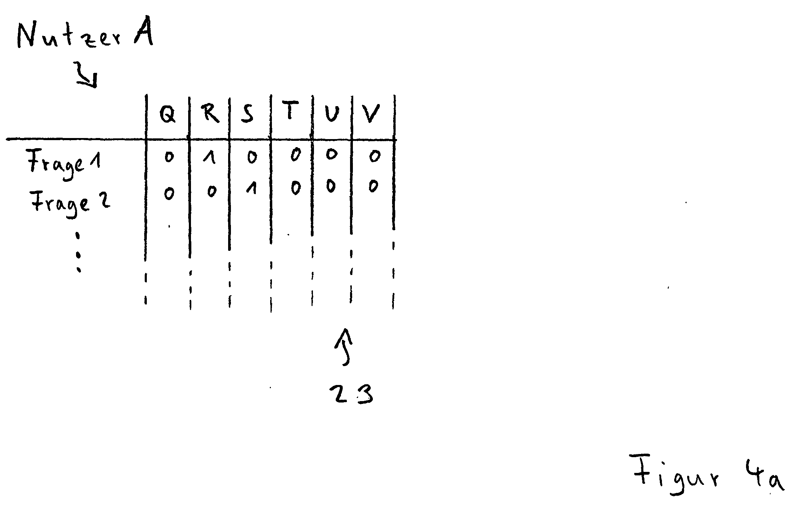

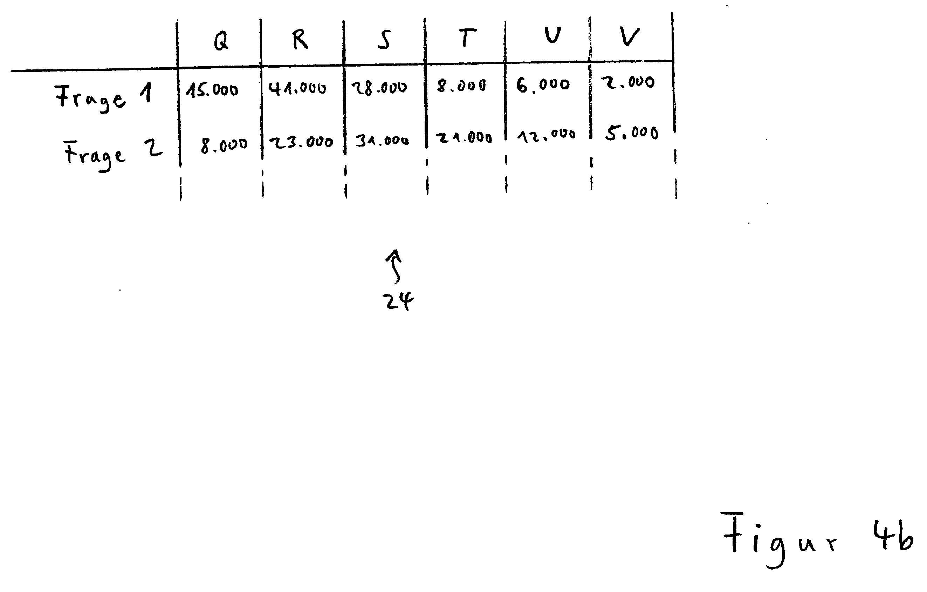

Gemäß Figur 3 ist in einer in einer (nicht dargestellten) Speichereinrichtung des Internet-Zentralrechners 17 gespeicherten Datenbank eine Daten-Zuordnungstabelle 19 abgespeichert. In der Zuordnungstabelle 19 sind die vom Internet-Zenttalrechner 17 an das jeweilige Mobiltelefon 2 gesendeten Bild- bzw. Bild-/Tondaten, z.B. die o.g. Fragen 1, 2, 3, 4, 5, jeweils bestimmten von der Fernseh- oder Radio-Zentralstation 8, 12 gesendeten Ton-/Bild- bzw. Tondaten, z.B. einem bestimmten Werbespot zugeordnet. Statt mit Hilfe einer Zuordnungstabelle kann die Datenzuordnung auch auf beliebige andere Weise erreicht werden, z.B. mit Hilfe einer entsprechend eingerichteten, in der Speichereinrichtung abgespeicherten relationalen Datenbank.

Wieder bezogen auf Figur 1 weist das Datenkommunikationssystem 1 einen weiteren Fernsehapparat 20 auf (und/oder ggf. einen weiteren Radio-Empfangsapparat), der entsprechend wie die übrigen Fernsehapparate 5, 6, 7 (bzw. die übrigen Radio-Empfangsapparate 10, 11) die von der Zentralstation 8, 12 z.B. über das Kabelnetz 9 ausgesendeten Daten, insbesondere die o.g. Werbesendung mit den Werbespots empfängt. Die entsprechenden Werbespot-Bilder (bzw. Werbespot-Texte) werden an einem Bildschirm des weiteren Fernsehapparats 20 dargestellt (bzw. von einem Lautsprecher des Radio-Empfangsapparats ausgestrahlt), und können von einer für die Steuerung des Datenkommunikationssystems 1 verantwortlichen Person D betrachtet (bzw. angehört) werden.

Diese veranlasst durch entsprechende Eingaben an einem Eingabemittel, z.B. einer mit dem Zentralrechner 17 verbundenen Tastatur 21, dass der Zentralrechner 17 zu einem Zeitpunkt t₀, zu dem der erste Werbespot ausgestrahlt wird (oder etwas vorher oder nachher) die zum ersten Werbespot 1 zugeordneten Fragen auf die oben beschriebene Weise an die Mobiltelefone 2, 3, 4 versendet. Auf entsprechende Weise wird durch die für die Steuerung des Datenkommunikationssystems 1 verantwortliche Person D zu einem Zeitpunkt t₁, zu dem der zweite Werbespot ausgestrahlt wird (oder kurz vorher oder nachher) das Verschicken der entsprechenden, dem zweiten Werbespot zugeordneten Fragen veranlasst, usw.

Das Versenden der Daten durch den Zentralrechner 17 kann alternativ auch automatisch erfolgen, z.B. unter Steuerung einer auf der Speichereinrichtung des Zentralrechners 17 abgespeicherten, auf einem Zentralrechner-Mikroprozessor laufenden Steuerungssoftware.

Ist der Zeitpunkt t₀ bekannt, zu dem der erste Werbespot ausgestrahlt wird, und/oder die Zeitpunkte t₁, t₂, zu denen die folgenden Werbespots ausgestrahlt werden (bzw. die Zeitdauer Δt1, Δt2, etc. der einzelnen Werbespots) können diese in der Speichereinrichtung des Zentralrechners 17 abgespeichert werden (vgl. Figur 3). Beispielsweise können wieder bezogen auf Figur 1 die Zeitpunkte to.11, t₂, (bzw. die Zeitdauern Al, At2) vorab manuell über die Tastatur 21 eingegeben, und an die Zentralrechner-Speichereinrichtung weitergeleitet werden. Alternativ können die Zeitpunkte t₀, t₁ t₂, (bzw. die Zeitdauern Δt1, Δt2) auch von der jeweiligen Fernsehanstalt bzw. Radio-Sendeanstalt - z.B. von der Zentralstation 8, 12 aus - über eine (nicht dargestellte) Internetverbindung an den Zentralrechner 17 übertragen, und in dessen Speichereinrichtung abgespeichert werden.

Der Zentralrechner 17 weist einen Timer auf (nicht dargestellt). Die von diesem angegebene Zeit wird mit den o.g. Zeitpunkten t₀, t₁, t₂ verglichen. Die Zeitpunkte t₁, t₂ können z.B. auch dadurch ermittelt werden, dass der Zentralrechner 17 zu dem Zeitpunkt t₀ die o.g. Zeitdauern Δt1, Δt2 hinzuaddiert. Stimmt die vom Timer angegebene Zeit mit einem der o.g. Zeitpunkte t₀, t₁, t₂ überein, werden die den Werbespots zugeordneten Fragen automatisch an die Mobiltelefone 2, 3, 4 weitergeleitet.

Die die Werbespots betreffenden Fragen sind z.B. so gestellt, dass sie mit Ja oder Nein beantwortet werden müssen (Beispiele: "Gefällt Ihnen der Werbespot?" "Gefällt Ihnen das Produkt?" "Sind Sie am Kauf dieses Produkts interessiert?", oder z.B. mit einer von mehreren, z.B. vier, fünf oder sechs vorgegebenen möglichen Antworten (Beispiele: "Wie finden Sie den Werbespot?", "Wie finden Sie die Hauptdarstellerin?", "Wie finden Sie das Produkt?", mit den möglichen Antworten Q, R, S, T, U, V "Überragend" "Sehr gut", "gut", "mittel", "schlecht", "sehr schlecht'').

Die vorgegebenen Antworten Q, R, S, T, U, V sind gemäß Figur 3 - unter Zuordnung zur entsprechenden Frage - ebenfalls in der Speichereinrichtung des Zentralrechners 17 abgespeichert, und werden zusammen mit den Fragen an die jeweiligen Mobiltelefone 2, 3, 4 übertragen, dort zwischengespeichert, und z.B. gemäß Figur 2 am jeweiligen Display 18 dargestellt.

Der Nutzer A des Mobiltelefons 2 kann durch entsprechende Eingaben an der Tastatur 22, beispielsweise durch Anklicken, jeweils eine der vorgegebenen Antworten auswählen (die Auswahl kann alternativ auf eine beliebige andere Weise erfolgen, z.B. bei einem Touch-Screen-Display durch Berühren entsprechender Stellen des Displays 18).

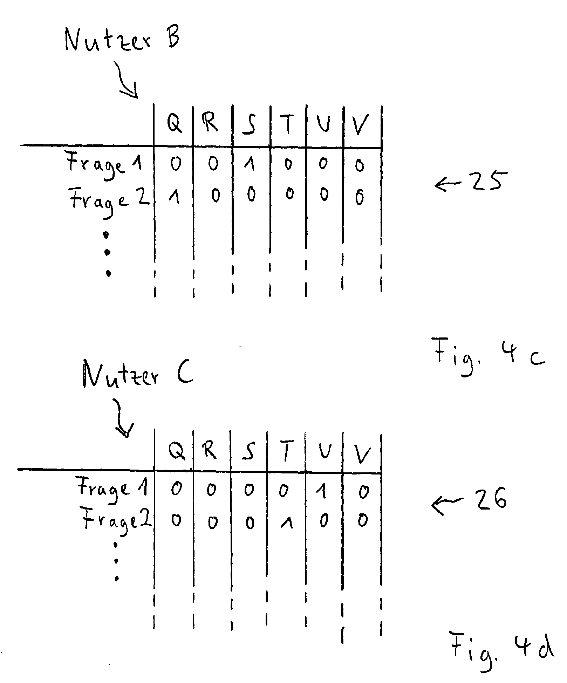

Wieder bezogen auf Figur 1 werden die Antworten (z.B. in Form von verschiedenen, jeweils einer Antwort zugeordneten Bitfolgen) vom jeweiligen Mobiltelefon 2 über die jeweilige Mobilfunknetz-Basisstation 15, und die o.g. zentralen Rechner an das Internet, und von dort aus an den Zentralrechner 17 übertragen, wo die jeweils gegebenen Antworten Q, R, S, T, U, V gemäß Figur 4a (und gemäß Figur 4c, 4d) unter Zuordnung zum jeweiligen Nutzer A, B, C jeweils in einer weiteren in der Speichereinrichtung des Zentralrechners 17 gespeicherten Tabelle 23, 25, 26 abgespeichert werden. Beim hier dargestellten Beispiel wird durch ein Bit "1" gekennzeichnet, dass eine bestimmte Antwort gewählt, und durch ein Bit "0", dass eine bestimmte Antwort nicht gewählt wurde.

Die Zuordnung der gegebenen Antworten zu einem bestimmten Nutzer A, B, C kann z.B. unter Verwendung der MIN (Mobile Identification Number) des jeweils verwendeten Mobiltelefons 2, über die Telefonnummer des jeweiligen Mobiltelefons 2, dessen SIMM-Nummer, oder eine beliebige, andere Kennung erfolgen (z.B. mit Hilfe eines am jeweiligen Mobiltelefon 2 eingegebenen Kennworts, oder dessen Internet-Adresse).

Im Zentralrechner 17 wird dann unter Steuerung der in der Speichereinrichtung des Zentralrechners 17 gespeicherten Steuerungssoftware eine Auswertung sämtlicher eingehender Antworten durchgeführt (bei 1.000, 10.000 bzw. 100.000 teilnehmenden Nutzern A, B, C des Datenkommunikationssystems 1 und sechs vorgegebenen Antworten z.B. 6.000, 60.000 bzw. 600.000 Antworten pro Spot). Der Zentralrechner 17 und die in dessen Speichereinrichtung gespeicherte Steuerungssoftware sind so ausgelegt bzw. programmiert, dass die o.g. Auswertung noch während der Werbesendung, z.B. spätestens nach 3 Minuten, besonders vorteilhaft noch während des jeweiligen Werbespots, z.B. spätestens nach 30 sec, beendet ist.

Zur Auswertung wird z.B. gemäß Figur 4b ermittelt, wie häufig insgesamt für eine bestimmte Frage eine bestimmte Antwort gewählt wurde. Hierzu werden z.B. für sämtliche teilnehmende Nutzer A, B, C die in der Tabelle 23 gemäß Figur 4a jeweils einer bestimmten Antwort Q, R, S, T zugeordneten Bits "0" oder "1" addiert, und der jeweilige Zahlenwert unter Zuordnung zur jeweiligen Frage und zur jeweiligen Antwort Q, R, S, T, U, V in der in Figur 4b dargestellten Auswertetabelle 24 abgespeichert.

Beim hier dargestellten Beispiel ist - bei 100.000 teilnehmenden Nutzern A, B, C des Daten kommunikationssystems 1 - z.B. bezüglich der Frage 1 15.000-fach die Antwort Q, 41.000-fach die Antwort R, 28.000-fach die Antwort S, 8.000-fach die Antwort T, 6.000-fach die Antwort U, und 2.000-fach die Antwort V angegeben worden (und z.B. bezüglich der Frage 2 8.000-fach die Antwort Q, 23.000-fach die Antwort R, 31.000-fach die Antwort S, 21.000-fach die Antwort T, 12.000-fach die Antwort U, und 5.000-fach die Antwort V).

Dann wird unter Steuerung der in der Speichereinrichtung des Zentralrechners 17 gespeicherten Steuerungssoftware für jede Frage die jeweils am häufigsten angegebene Antwort ermittelt (hier: für die Frage 1 die Antwort R, und für die Frage 2 die Antwort S, usw.).

Als nächstes wird ermittelt, welche der Nutzer A, B, C für sämtliche Fragen jeweils genau diejenigen Antworten gewählt hatten, die insgesamt am häufigsten gewählt worden waren.

Unter diesen Nutzern wird mittels eines Zufallsgenerators - wiederum unter Steuerung der auf der Speichereinrichtung des Zentralrechners 17 abgespeicherten Steuerungssoftwareeiner der Nutzer als "Gewinner" ausgewählt (hier: der Nutzer A). Alternativ kann z.B. auch bestimmt werden, dass mehrere oder sämtliche der Nutzer, die für alle Fragen jeweils genau diejenigen Antworten gewählt hatten, die insgesamt am häufigsten gewählt worden waren, "Gewinner" sein sollen. Hat keiner der Nutzer genau diejenigen Antworten gewählt, die insgesamt am häufigsten gewählt worden waren, hat keiner der Nutzer gewonnen. Bei der nächsten Spielrunde wird dann die Höhe des auszuschüttenden Gewinns um die nichtausgeschüttete Summe erhöht ("Jackpot").

Bei einem alternativen Ausführungsbeispiel kann - insbesondere wenn aufgrund der hohen Anzahl gestellter Fragen die Gewinnchancen relativ klein sind - ein Nutzer als Gewinner ermittelt werden, der für die größte Anzahl von Fragen jeweils genau diejenigen Antworten gewählt hat, die insgesamt am häufigsten gewählt worden waren, oder z.B. ein - mittels einer Varianz-Analyse - ermittelter Nutzer, dessen Antworten am nächsten an den am häufigsten gewählten Antworten liegen.

Bei einem weiteren, alternativen Ausführungsbeispiel wird mittels eines Zufallsgeneratorswiederum unter Steuerung der auf der Speichereinrichtung des Zentralrechners 17 abgespeicherten Steuerungssoftware - einer der Nutzer A, B, C (z.B. der Nutzer A) ausgewählt, der fortan als "Referenz-Nutzer" dient. Die vom jeweiligen "Referenz-Nutzer" gegebenen Antworten werden, wie weiter unten genauer beschrieben wird, als sog. Referenz-Antworten verwendet ("Lead-Wertung"). Die Tatsache, dass ein bestimmter Nutzer gerade "Referenz-Nutzer" ist, wird dem entsprechenden Nutzer mitgeteilt. Hierzu werden - veranlasst durch die o.g. Steuerungssoftware - vom Zentralrechner 17 aus entsprechende Daten über das Internet an das jeweilige Mobiltelefon 2 des jeweiligen "Referenz-Nutzers" A gesendet, an dessen Display 18 dann gemäß Figur 2 eine Nachricht wie z.B. "Sie sind Lead-User l" angezeigt wird.

Als nächstes wird ermittelt, welcher der übrigen Nutzer B, C für sämtliche Fragen jeweils genau diejenigen Antworten gewählt hatte, wie gemäß der in Figur 4a gezeigten Tabelle der "Referenz-Nutzer" A.

Unter diesen Nutzern B, C (alternativ zusätzlich unter Einschluß des "Referenz-Nutzers" A) wird mittels des Zufallsgenerators ein einziger Nutzer als "Gewinner" ausgewählt. Alternativ kann z.B. auch bestimmt werden, dass mehrere oder sämtliche der Nutzer, die für alle Fragen jeweils genau die gleichen Antworten gewählt hatten, wie der "Referenz-Nutzer" A, "Gewinner" sein sollen. Bei einem alternativen Ausführungsbeispiel kann z.B. auch ein Nutzer als Gewinner ermittelt werden, der für die größte Anzahl von Fragen jeweils genau diejenigen Antworten gewählt hat, wie der "Referenz-Nutzer" A, oder z.B. ein - mittels einer Varianz-Analyse - ermittelter Nutzer, dessen Antworten am nächsten an denjenigen des "Referenz-Nutzers" A liegen.

Alternativ ist z.B. auch folgende Auswertungsvariante denkbar Zunächst wird für jeden teilnehmenden Nutzer A, B, C ermittelt, ob und wie viele weitere, teilnehmende Nutzer A, B, C sämtliche Fragen 1, 3, 3, 4, 5 (oder eine vorbestimmte oder von einem Zufallsgenerator ermittelte Teilmenge der Fragen 1, 2, 3, 4, 5) identisch beantwortet haben.

Hierzu werden beispielsweise zunächst für den Nutzer A sämtliche in dessen in Figur 4a gezeigten Tabelle 23 gespeicherte, die jeweils gewählten Antworten Q, R, S, T, U, V kennzeichnende Bits mit den jeweils entsprechenden, in der in Figur 4c gezeigten Tabelle 25 gespeicherten Bits verglichen, die den vom Nutzer B gegebenen Antworten entsprechen. Sind sämtliche, jeweils korrespondierende Bits identisch, wird der Stand eines (zunächst auf Null gesetzten) Zählers, welcher die Häufigkeit der vom Nutzer A gewählten Frage-Antwort-Kombination A ermittelt, um eins erhöht. Ansonsten bleibt der Zählerstand des Zählers unverändert.

Als nächstes werden auf entsprechende Weise die vom Nutzer A gegebenen Antworten Q, R, S, T, U, V sukzessive mit denjenigen Antworten verglichen, die der Nutzer C, und die übrigen Nutzer gegeben haben (z.B. wiederum jeweils durch Vergleich entsprechender, z.B. in den Tabellen 23 bzw. 26 gemäß Figur 4a, 4d gespeicherten Bits). Nach jedem durchgeführten Vergleich wird - abhängig davon, ob Identität sämtlicher Bits vorliegt, oder nicht, wiederum der Zählerstand des Zählers entweder um eins erhöht, oder gleich gelassen.

Entsprechend werden die Frage-Antwortkombination B des zweiten Nutzers B mit denjenigen der übrigen Nutzer verglichen. Entsprechende Vergleiche werden auch für die Frage-Antwort-Kombination des dritten Nutzers C, sowie für die Frage-Antwort-Kombinationen der übrigen Nutzer durchgeführt.

Auf diese Weise kann für jede gegebene Frage-Antwortkombination A, B, C, etc. - z.B. durch Ablesen der Zählstände der verschiedenen Zähler - die jeweils auftretende Häufigkeit ermittelt werden, die gemäß Figur 4e unter Zuordnung zur entsprechenden Frage-Antwortkombination A, B, C in einer weiteren Auswertetabelle 27 abgespeichert wird. In einer weiteren Spalte der Tabelle 27 wird abgespeichert, welche Nutzer genau eine bestimmte Frage-Antwort-Kombination gewählt haben.

Als "Gewinnergruppe" können z.B. diejenigen Nutzer A, X, Y, ... ermittelt werden, die die diejenige Frage-Antwortkombination A gewählt haben, die die größte Häufigkeit aufweist. Alternativ kann eine "Gewinnergruppe" auch diejenigen Nutzer C, ... umfassen, die diejenige Frage-Antwortkombination gewählt haben, deren Häufigkeit am kleinsten (oder am kleinsten, jedoch größer als 0) ist, oder eine beliebige andere, z.B. von einem Zufallsgenerator bestimmte "Gewinnergruppe" mit Nutzern B, Z, ..., die eine Häufigkeit größer als 0 hat (d.h. die Frage-Antwortkombinationen von mindestens zwei Nutzern stimmen überein). Alternativ können auch mehrere derartiger "Gewinnergruppen" bestimmt werden.

Unter den der einen oder den mehreren "Gewinnergruppen" zugehörigen Nutzern kann mittels eines Zufallsgenerators ein einziger, oder mehrere Nutzer als endgültige "Gewinner" ausgewählt werden. Alternativ können z.B. sämtliche Mitglieder der einen oder mehreren "Gewinnergruppen" endgültige "Gewinner" sein.

Bei einem weiteren, alternativen Ausfiihrungsbeispiel werden statt der auf einen einzigen Werbespot bezogenen Fragen 1, 2, 3, 4, 5 für die o.g. Gewinnermittlungsverfahren mehrere, z.B. sämtliche während einer Werbesendung ausgestrahlte Spots, in Betracht gezogen (z.B. 7 Spots). Als Gewinner wird dann z.B. derjenige Nutzer ermittelt, der für sämtliche (oder z.B. einen variabel wählbaren Teil) der dann z.B. insgesamt 7 Spots x 5 Fragen = 35 Fragen jeweils genau diejenigen Antworten gewählt hat, die insgesamt am häufigsten gewählt worden waren.

Alternativ kann zu jedem Werbespot (statt mehreren, z.B. mehr als 1, 2, 3 oder 5 Fragen) z.B. nur eine einzige Frage gestellt werden. Besonders bevorzugt wird dann zu mehreren, vorteilhaft zu sämtlichen Werbespots einer Werbesendung (z.B. zu mehr als 2, z.B. zu 3, 4 oder 5 Spots) ein- und dieselbe Frage gestellt (z.B. die o.g. Frage 1, mit z.B. 2, oder mehr als 2, z.B. 5 oder 6 möglichen Antworten Q, R, S, T, U, V).

Die Höhe des jeweils ausgeschütteten Gewinns ist in der Speichereinrichtung des Zentralrechners 17 abgespeichert. Beispielsweise kann jeweils ein vorab festgelegter, fester Betrag ausgeschüttet werden. Bei diesem kann es sich z.B. um einen festen Anteil, z.B. 10% des Betrags handeln, den die jeweilige Fernsehanstalt bzw. Radio-Sendeanstalt für einen bestimmten Werbespot (oder z.B. für die gesamte, aus mehreren Spots bestehende Webesendung) von dem (den) Werbetreibenden für die Ausstrahlung des (der) Spots erhält.

Alternativ kann die Höhe des jeweils ausgeschütteten Gewinns unter Steuerung der in der Speichereinrichtung des Zentralrechners 17 abgespeicherten Steuerungssoftware jeweils individuell vor der Durchführung einer Gewinnermittlung festgelegt werden, z.B. in Abhängigkeit von der Anzahl der augenblicklich teilnehmenden Nutzer gewählt werden. Beispielsweise kann die Höhe des insgesamt ausgeschütteten Gewinns direkt proportional zur Nutzerzahl sein (z.B. ermittelt durch die Formel Tausenderkontaktpreis (TKP) mal Nutzerzahl), oder z.B. indirekt proportional zur Nutzerzahl (um durch höhere Gewinne mehr Nutzer zum Mitspielen zu veranlassen). Vorher wird unter Steuerung der in der Speichereinrichtung des Zentralrechners 17 abgespeicherte Steuerungssoftware die Anzahl der augenblicklich teilnehmenden Nutzer ermittelt.

Sämtliche teilnehmenden Nutzer und alle oder ein Teil der potentiellen Nutzer werden über die Anzahl der teilnehmenden Nutzer A, B, C, und/oder die Höhe des jeweils auszuschüttenden Gewinns informiert. Die entsprechenden Daten werden - veranlasst durch die o.g. Steuerungssoftware - vom Zentralrechner 17 über das Internet, die o.g. zentralen Rechner und die Mobilfunknetz-Basisstationen 15, 16 an die jeweiligen Mobiltelefone 2, 3, 4 gesendet. Durch diese Daten wird dann veranlasst, dass gemäß Figur 2 am Display 18 des jeweiligen Mobiltelefons 2 entsprechende Nachrichten wie z.B. "100.000 Teilnehmer" und/oder "200.000 EU-RO Gewinnsumme" angezeigt werden.

Unmittelbar nach der Ermittlung der jeweiligen Gewinner werden diese - wiederum veranlasst durch die in der Speichereinrichtung des Zentralrechners 17 abgespeicherte Steuerungssoftware - über die Tatsache benachrichtigt, dass sie als Gewinner ausgewählt wurden. Hierzu werden entsprechende Gewinn-Benachrichtigungsdaten vom Zentralrechner 17 an das dem jeweiligen Gewinner zugeordnete Mobiltelefon 2, 3, 4 gesendet. Durch diese Daten wird dann veranlasst, dass am Display 18 des jeweiligen Mobiltelefons 2 - z.B. durch Einblenden einer Nachricht "Gewinn!" - eine Gewinnbenachrichtigung angezeigt wird. Besonders vorteilhaft wird dem jeweiligen Nutzer A zugleich auch die Höhe des jeweils erzielten Gewinns mitgeteilt (z.B. mit Hilfe der Nachricht "Sie haben 20.000 EURO gewonnen").

Eine entsprechende Nachricht wird auch an die anderen, teilnehmenden (und/oder alle oder einen Teil der potentiellen) Nutzer gesendet, z.B. in Form der Nachricht "Ein Mitspieler hat gerade 20.000 EURO gewonnen !".

Mit Hilfe der in der Speichereinrichtung des Zentralrechners 17 gespeicherten Daten kann Marktforschung in Echtzeit betrieben werden (Polling oder Panelling in Echtzeit). Beispielsweise kann die Erinnerbarkeit eines Produktnamens getestet werden, indem eine bestimmte Zeitdauer nach einer Werbesendung auf die o.g. Art diesbezügliche Fragen an die Mobilfunkgeräte 2 der jeweiligen Nutzer A versendet werden. Die Beantwortung derartiger Fragen kann entsprechend der obigen Darstellung wiederum dadurch belohnt werden, dass entsprechende Gewinne ausgeschüttet werden.

Außerdem können mit dem erfindungsgemäßen System 1 gegebene Kaufreize unmittelbar in Kaufhandlungen umgewandelt werden. Beispielsweise kann automatisch - z.B. unmittelbar nach Ende des jeweiligen Spots / der jeweiligen Werbesendung - auf eine mit "Ja" beantwortete Frage "Sind Sie am Kauf dieses Produkts interessiert?" ein Link zur entsprechenden Website des Produktsanbieters hergestellt werden, oder es können weitere Produktinformationen über das Internet an das Mobiltelefon 2 des entsprechenden Nutzers A gesendet werden, usw.

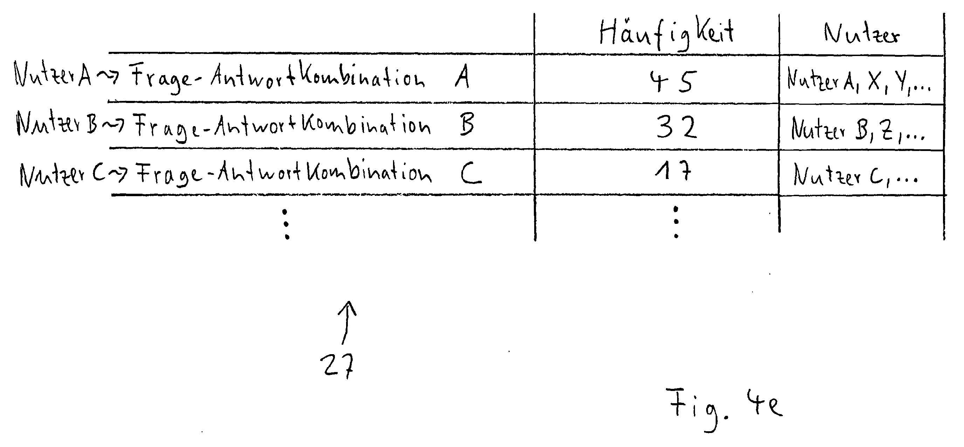

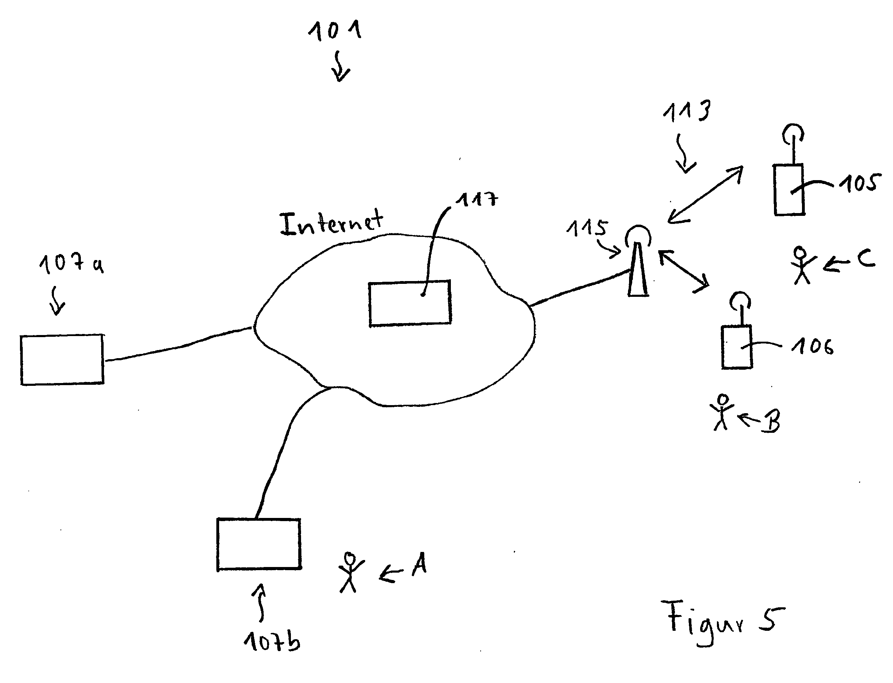

In Figur 5 ist ein weiteres Ausführungsbeispiel eines erfindungsgemäßen Datenkommunikationssystems 101 gezeigt. Dieses arbeitet im Prinzip wie das oben beschriebene, in Figur 1 dargestellte System 1. Allerdings werden als Anzeige-/Eingabevorrichtungen außer WAP- oder UMTS-fähiger Mobiltelefone 105, 106 auch eine Vielzahl stationärer oder mobiler mit dem Internet verbundener bzw. verbindbarer Rechner 107a, 107b, z.B. herkömmliche PCs, PDAs (Personal Digital Assistent), etc. verwendet. Die Mobiltelefone 105, 106 und die Rechner 107a, 107b nehmen - im Gegensatz zum oben im Zusammenhang mit Figur 1 beschriebenen Ausführungsbeispiel - gleichzeitig auch eine Funktion wahr, die derjenigen Funktion entspricht, die bei dem Ausführungsbeispiel gemäß Figur 1 die Fernseh- bzw. Radio-Empfangsapparate 5, 6, 7, 10, 11 erfüllen.

Wie in Figur 5 gezeigt ist, sind die Mobiltelefone 105, 106 über Basisstationen 115 an entsprechende Mobilfunknetze 113 angeschlossen, und führen mit den jeweiligen Mobilfunknetz-Basisstationen 115, z.B. unter Verwendung des WAP-, GPRS- oder UMTS-Protokolls, eine bidirektionale Datenkommunikation durch.

Von der jeweiligen Basisstation 105 aus werden die Daten - unter Zwischenschaltung einer oder mehrerer zentraler Rechner, z.B. von Telefonverbindungs-Vermittlungsrechnern - an das Internet, und von dort aus an einen Internet-Zentralrechner 117 übertragen.

Dieser sendet die von einem bestimmten Mobiltelefon 105, 106 aus angefragten WAP- oder Internetseiten (bzw. die von diesem aus angeforderten Bilddaten (oder Bild-/Tondaten)) über das Internet, die o.g. zentralen Rechner und die Mobilfunknetz-Basisstationen 115 an das jeweils anfragende Mobiltelefon 105, 106.

Auf entsprechende Weise kann von den Rechnern 107a, 107b aus auf auf der Speichereinrichtung des Zentralrechners 117 abgespeicherte Daten, z.B. Internetseiten zugegriffen werden. Hierzu wird am entsprechenden Rechner 107a, 107b z.B. die der jeweiligen Internetseite zugehörige URL-Adresse eingegeben. Die jeweils angeforderte Internetseite (bzw. die angeforderten Bild- oder Bild-/Tondaten) werden dann über das Internet an den jeweils anfragenden Rechner 107a, 107b übertragen.

An einem Bildschirm 118a des jeweiligen Rechners 107a, 107b bzw. an einem Display 118b des jeweiligen Mobiltelefons 105, 106 werden dann die den Bilddaten entsprechenden Bilder angezeigt (optional werden zusätzlich von an den Rechnern bzw. Mobiltelefonen vorgesehenen Lautsprechern die den empfangenen Tondaten entsprechenden Tonsignale ausgestrahlt).

Mit den vom Zentralrechner 117 aus übertragenen Bildern werden bestimmte Waren / Dienstleistungen beworben. Dies kann z.B. in Form von (unbewegten) Einzelbildern, oder in Form von Bewegtbildern, z.B. Werbespots, geschehen.

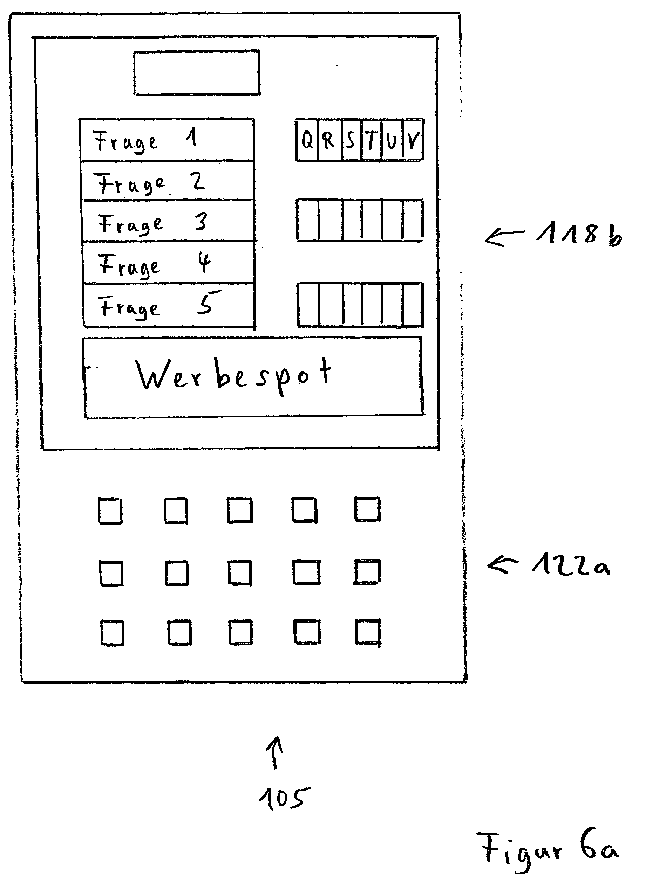

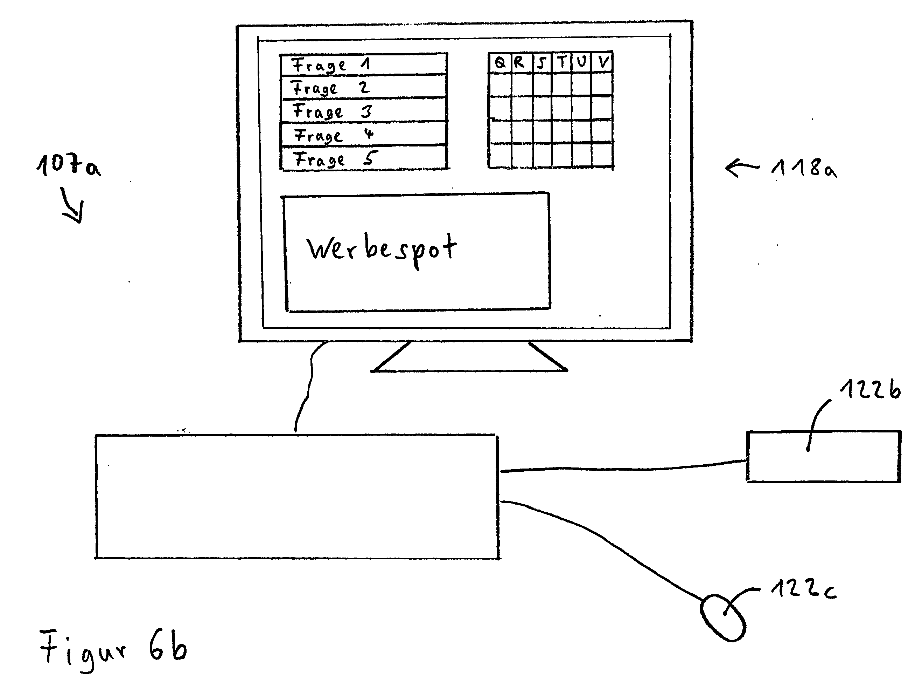

Gemäß Figur 6a und 6b weist jedes Mobiltelefon 105 und jeder Rechner 107a neben der jeweiligen Anzeigeeinrichtung (hier: dem Display 118b bzw. dem Bildschirm 118a) eine Eingabeeinrichtung (hier: eine Tastatur 122a, 122b bzw. eine Maus 122c) auf.

Wie in Figur 6a und 6b dargestellt ist, werden - veranlasst durch den Zentralrechner 117-am Display 118b des Mobiltelefons 105 bzw. am Bildschirm 118a des Rechners 107a außer dem jeweiligen Werbespot zusätzlich z.B. in Form von Textnachrichten an den jeweiligen Nutzer A, B, C gerichtete Fragen zum jeweiligen Werbespot (hier: die Fragen 1, 2, 3, 4, 5) dargestellt.

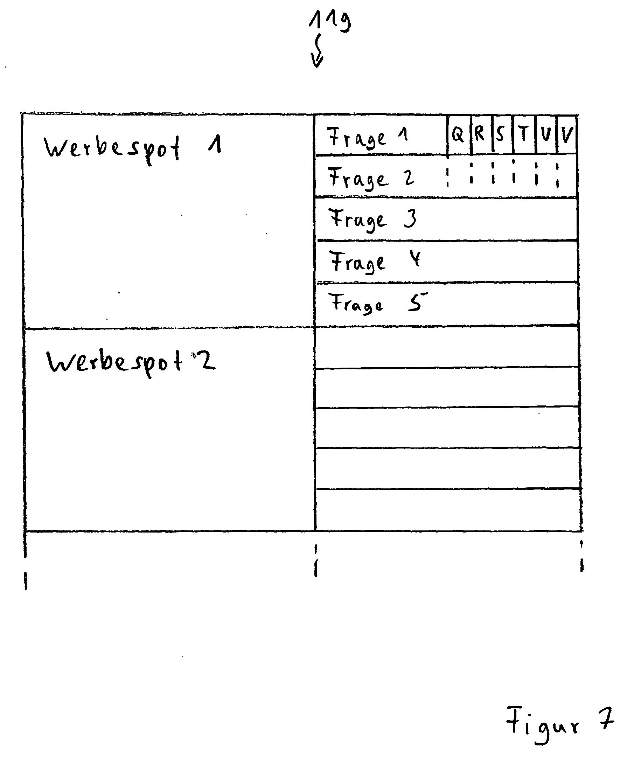

Hierzu ist in einer in einer (nicht dargestellten) Speichereinrichtung des Internet-Zentralrechners 117 gespeicherten Datenbank gemäß Figur 7 eine Daten-Zuordnungstabelle 119 abgespeichert. In der Zuordnungstabelle 119 sind die vom Internet-Zentralrechner 117 an das jeweilige Mobiltelefon 105 bzw. den jeweiligen Rechner 107a gesendeten Textnachrichten, z.B. die o.g. Fragen 1, 2, 3, 4, 5, jeweils einem bestimmten Werbespot zugeordnet. Statt mit Hilfe einer Zuordnungstabelle kann die Datenzuordnung auch auf beliebige andere Weise erreicht werden, z.B. mit Hilfe einer entsprechend eingerichteten, in der Speichereinrichtung abgespeicherten relationalen Datenbank.

Die die Werbespots betreffenden Fragen sind z.B. so gestellt, dass sie mit Ja oder Nein beantwortet werden müssen (Beispiele: "Gefällt Ihnen der Werbespot?" "Gefällt Ihnen das Produkt?" "Sind Sie am Kauf dieses Produkts interessiert?", oder z.B. mit einer von mehreren, z.B. vier, fünf oder sechs vorgegebenen möglichen Antworten (Beispiele: "Wie finden Sie den Werbespot?", "Wie finden Sie die Hauptdarstellerin?", "Wie finden Sie das Produkt?", mit den möglichen Antworten Q, R, S, T, U, V "Überragend" "Sehr gut", "gut", "mittel", "schlecht", "sehr schlecht").

Die vorgegebenen Antworten Q, R, S, T, U, V sind gemäß Figur 7 - unter Zuordnung zur entsprechenden Frage - ebenfalls in der Speichereinrichtung des Zentralrechners 17 abgespeichert, und werden zusammen mit den Fragen an das jeweilige Mobiltelefon 105 bzw. den jeweiligen Rechner 107a übertragen, dort zwischengespeichert, und z.B. gemäß Figur 6a bzw. 6b am jeweiligen Display 118b bzw. am jeweiligen Bildschirm 118a dargestellt.

Der jeweilige Nutzer A, B, C des Mobiltelefons 105 bzw. des Rechners 107a kann durch entsprechende Eingaben an der Tastatur 122a, 122b bzw. an der Maus 122c, beispielsweise durch Anklicken, jeweils eine der vorgegebenen Antworten auswählen (die Auswahl kann alternativ auf eine beliebige andere Weise erfolgen, z.B. bei einem Touch-Screen-Display durch Berühren entsprechender Stellen des Displays 118b).

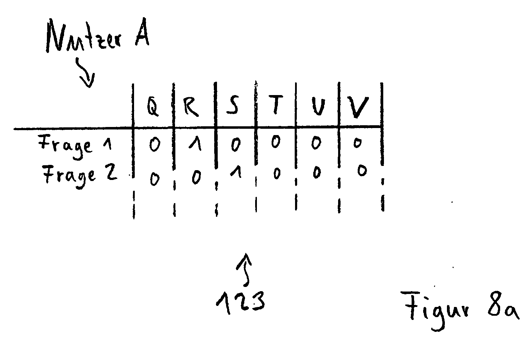

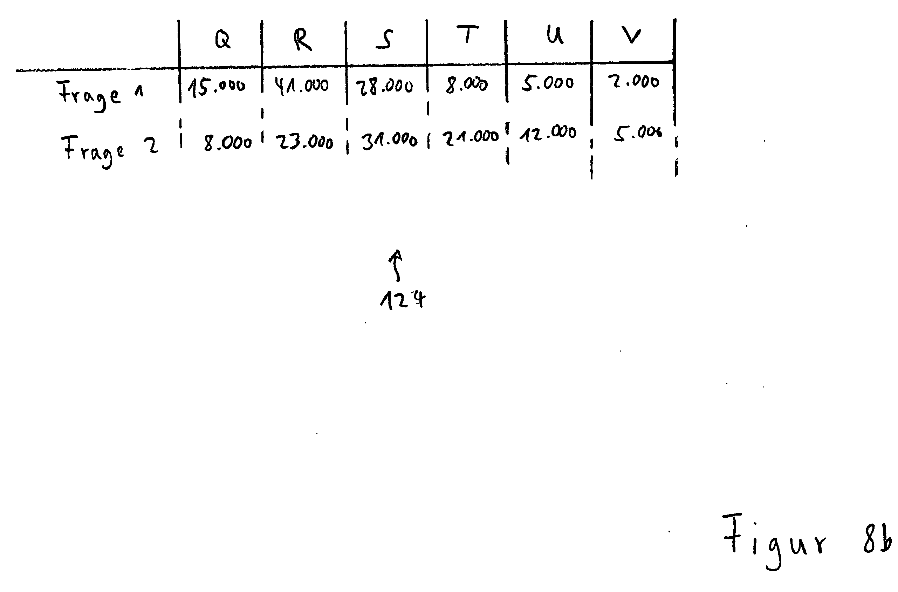

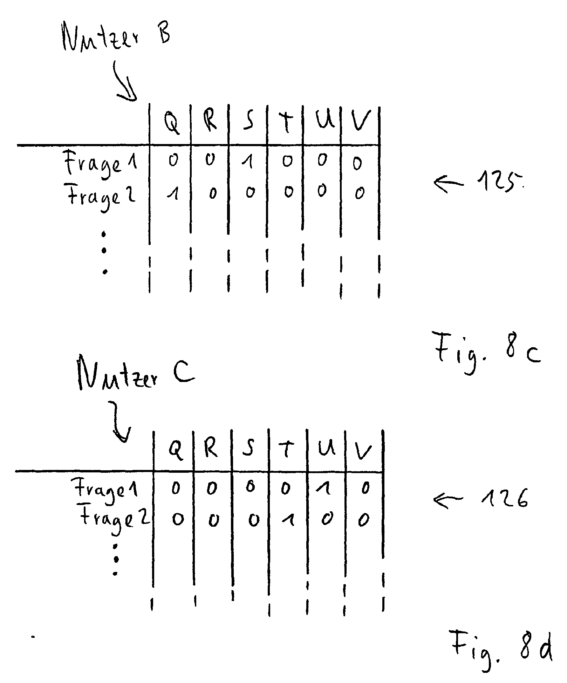

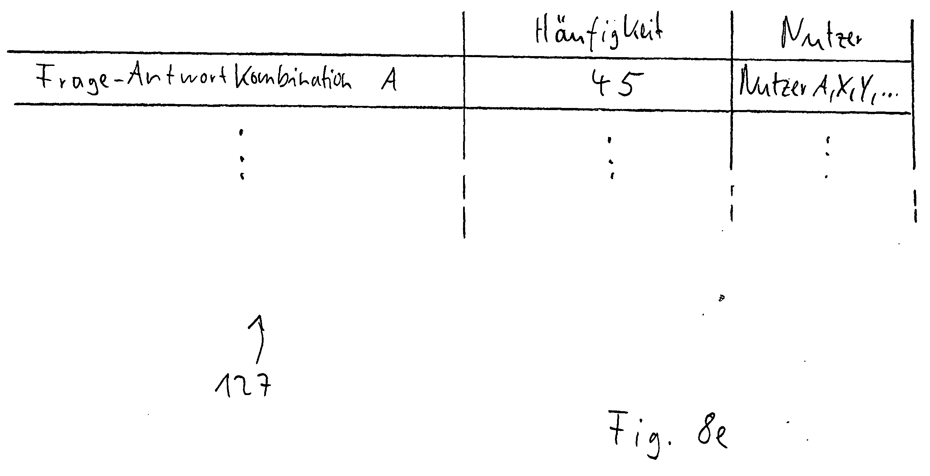

Wieder bezogen auf Figur 5 werden die Antworten (z.B. in Form von verschiedenen, jeweils einer Antwort zugeordneten Bitfolgen) vom jeweiligen Mobiltelefon 105 bzw. vom jeweiligen Rechner 107a über das Internet an den Zentralrechner 117 übertragen, wo die jeweils gegebenen Antworten gemäß Figur 8a unter Zuordnung zum jeweiligen Nutzer A, B, C in einer weiteren in der Speichereinrichtung des Zentralrechners 117 gespeicherten Tabelle 123 abgespeichert werden. Beim hier dargestellten Beispiel wird durch ein Bit "1" gekennzeichnet, dass eine bestimmte Antwort gewählt, und durch ein Bit "0", dass eine bestimmte Antwort nicht gewählt wurde. Entsprechende Tabellen 125, 126 werden gemäß Figur 8c, 8d auch für die übrigen Nutzer B, C, etc. geführt.

Die Zuordnung der gegebenen Antworten zu einem bestimmten Nutzer A, B, C kann z.B. unter Verwendung der Internetadresse des jeweiligen Rechners 107a erfolgen, oder z.B. über die MIN (Mobile Identification Number) des jeweils verwendeten Mobiltelefons 105, über dessen Telefonnummer oder SIMM-Nummer, oder eine beliebige, andere Kennung (z.B. mit Hilfe eines am jeweiligen Mobiltelefon 105 eingegebenen Kennworts, oder dessen Internet-Adresse).

Im Zentralrechner 117 wird dann unter Steuerung der in der Speichereinrichtung des Zentralrechners 117 gespeicherten Steuerungssoftware eine Auswertung sämtlicher eingehender Antworten durchgeführt (bei 1.000, 10.000 bzw. 100.000 teilnehmenden Nutzern A, B, C des Datenkommunikationssystems 101 und sechs vorgegebenen Antworten z.B. 6.000, 60.000 bzw. 600.000 Antworten pro Spot). Der Zentralrechner 117 und die in dessen Speichereinrichtung gespeicherte Steuerungssoftware sind so ausgelegt bzw. programmiert, dass die o.g. Auswertung noch während oder kurz nach der Aussendung des jeweiligen Werbespots beendet ist.

Zur Auswertung wird gemäß Figur 8b ermittelt, wie häufig insgesamt für eine bestimmte Frage eine bestimmte Antwort gewählt wurde. Hierzu werden z.B. für sämtliche teilnehmende Nutzer A, B, C die in der Tabelle 123 gemäß Figur 8a jeweils einer bestimmten Antwort Q, R, S, T zugeordneten Bits "0" oder "1" addiert, und der jeweilige Zahlenwert unter Zuordnung zur jeweiligen Frage und zur jeweiligen Antwort Q, R, S, T, U, V in der in Figur 8b dargestellten Auswertetabelle 124 abgespeichert.

Beim hier dargestellten Beispiel ist - bei 100.000 teilnehmenden Nutzern A, B, C des Datenkommunikationssystems 101 - z.B. bezüglich der Frage 1 15.000-fach die Antwort Q, 41.000-fach die Antwort R, 28.000-fach die Antwort S, 8.000-fach die Antwort T, 6.000-fach die Antwort U, und 2.000-fach die Antwort V angegeben worden (und z.B. bezüglich der Frage 2 8.000-fach die Antwort Q, 23.000-fach die Antwort R, 31.000-fach die Antwort S, 21.000-fach die Antwort T, 12.000-fach die Antwort U, und 5.000-fach die Antwort V).

Dann wird unter Steuerung des in der Speichereinrichtung des Zentralrechners 117 gespeicherten Steuerungssoftware für jede Frage die jeweils am häufigsten angegebene Antwort ermittelt (hier: für die Frage 1 die Antwort R, und für die Frage 2 die Antwort S, usw.).

Als nächstes wird ermittelt, welche der Nutzer A, B, C für sämtliche Fragen jeweils genau diejenigen Antworten gewählt hatten, die insgesamt am häufigsten gewählt worden waren.

Unter diesen Nutzern wird mittels eines Zufallsgenerators - wiederum unter Steuerung der auf der Speichereinrichtung des Zentralrechners 117 abgespeicherten Steuerungssoftwareeiner der Nutzer als "Gewinner" ausgewählt (hier: der Nutzer A).

Die oben im Zusammenhang mit dem in Bezug auf Figur 1 beschriebenen Varianten bzgL Ermittlung eines Gewinners, sowie die Möglichkeiten zur Bestimmung der Gewinnhöhe können in entsprechender Form auch bei dem in Figur 5 dargestellten Ausführungsbeispiel angewandt werden.

Alternativ ist entsprechend wie oben beschrieben z.B. auch folgende Auswertungsvariante denkbar: Zunächst wird für jeden teilnehmenden Nutzer A, B, C ermittelt, ob und wie viele weitere, teilnehmende Nutzer A, B, C sämtliche Fragen 1, 3, 3, 4, 5 (oder eine vorbestimmte oder von einem Zufallsgenerator ermittelte Teilmenge der Fragen 1, 2, 3, 4, 5) identisch beantwortet haben.

Hierzu werden beispielsweise zunächst für den Nutzer A sämtliche in dessen in Figur 8a gezeigten Tabelle 123 gespeicherte, die jeweils gewählten Antworten Q, R, S, T, U, V kennzeichnende Bits mit den jeweils entsprechenden, in der in Figur 8c gezeigten Tabelle 125 gespeicherten Bits verglichen, die den vom Nutzer B gegebenen Antworten entsprechen. Sind sämtliche, jeweils korrespondierende Bits identisch, wird der Stand eines (zunächst auf Null gesetzten) Zählers, welcher die Häufigkeit der vom Nutzer A gewählten Frage-Antwort-Kombination A ermittelt, um eins erhöht. Ansonsten bleibt der Zählerstand des Zählers unverändert

Als nächstes werden auf entsprechende Weise die vom Nutzer A gegebenen Antworten Q, R, S, T, U, V sukzessive mit denjenigen Antworten verglichen, die der Nutzer C, und die übrigen Nutzer gegeben haben (z.B. wiederum jeweils durch Vergleich entsprechender, z.B. in den Tabellen 123 bzw. 126 gemäß Figur 8a, 8d gespeicherten Bits). Nach jedem durchgeführten Vergleich wird - abhängig davon, ob Identität sämtlicher Bits vorliegt, oder nicht, wiederum der Zählerstand des Zählers entweder um eins erhöht, oder gleich gelassen.

Entsprechend werden die Frage-Antwortkombination B des zweiten Nutzers B mit denjenigen der übrigen Nutzer verglichen. Entsprechende Vergleiche werden auch für die Frage-Antwort-Kombination des dritten Nutzers C, sowie für die Frage-Antwort-Kombinationen der übrigen Nutzer durchgeführt.

Auf diese Weise kann für jede gegebene Frage-Antwortkombination A, B, C, etc. - z.B. durch Ablesen der Zählstände der verschiedenen Zähler - die jeweils auftretende Häufigkeit ermittelt werden, die gemäß Figur 8e unter Zuordnung zur entsprechenden Frage-Antwortkombination A, B, C in einer weiteren Auswertetabelle 127 abgespeichert wird. In einer weiteren Spalte der Tabelle 127 wird abgespeichert, welche Nutzer genau eine bestimmte Frage-Antwort-Kombination gewählt haben.

Als "Gewinnergruppe" können z.B. diejenigen Nutzer A, X, Y, ... ermittelt werden, die die diejenige Frage-Antwortkombination A gewählt haben, die die größte Häufigkeit aufweist. Alternativ kann eine "Gewinnergruppe" auch diejenigen Nutzer C, ... umfassen, die diejenige Frage-Antwortkombination gewählt haben, deren Häufigkeit am kleinsten (oder am kleinsten, jedoch größer als 0) ist, oder eine beliebige andere, z.B. von einem Zufallsgenerator bestimmte "Gewinnergruppe" mit Nutzern B, Z, ..., die eine Häufigkeit größer als 0 hat (d.h. die Frage-Antwortkombinationen von mindestens zwei Nutzern stimmen überein). Alternativ können auch mehrere derartiger "Gewinnergruppen" bestimmt werden.

Unter den der einen oder mehreren "Gewinnergruppen" zugehörigen Nutzern kann mittels eines Zufallsgenerators ein einziger, oder mehrere Nutzer als endgültige "Gewinner" ausgewählt werden. Alternativ können z.B. sämtliche Mitglieder der einen oder mehreren "Gewinnergruppen" endgültige "Gewinner" sein.

Außerdem können statt der auf einen einzigen Werbespot bezogenen Fragen 1, 2, 3, 4, 5 entsprechende auf mehrere, z.B. 7 aufeinanderfolgende Spots, bezogene Fragen in Betracht gezogen werden. Als Gewinner wird dann z.B. derjenige Nutzer ermittelt, der für sämtliche (oder z.B. einen variabel wählbaren Teil) der dann z.B. insgesamt 7 Spots x 5 Fragen = 35 Fragen jeweils genau diejenigen Antworten gewählt hat, die insgesamt am häufigsten gewählt worden waren. Um Manipulationsmöglichkeiten auszuschalten, können die hierbei verwendeten 7 Spots so ausgesendet werden, dass sie an den verschiedenen Mobiltelefonen bzw. Rechnern jeweils in unterschiedlicher, z.B. durchpermutierter Reihenfolge ausgegeben werden. Dadurch werden die Absprachemöglichkeiten zwischen verschiedenen Nutzern A, B, C eingeschränkt.

Alternativ kann zu jedem Werbespot (statt mehreren, z.B. mehr als 1, 2, 3 oder 5 Fragen) z.B. nur eine einzige Frage gestellt werden. Besonders bevorzugt wird dann zu mehreren, vorteilhaft zu sämtlichen Werbespots einer Werbesendung (z.B. zu mehr als 2, z.B. zu 3, 4 oder 5 Spots) ein- und dieselbe Frage gestellt (z.B. die o.g. Frage 1, mit z.B. 2, oder mehr als 2, z.B. 5 oder 6 möglichen Antworten Q, R, S, T, U, V).

Sämtliche teilnehmenden Nutzer und alle oder ein Teil der potentiellen Nutzer werden über die Anzahl der teilnehmenden Nutzer A, B, C, und/oder die Höhe des jeweils auszuschüttenden Gewinns informiert Die entsprechenden Daten werden - veranlasst durch die o.g. Steuerungssoftware - vom Zentralrechner 117 über das Internet an die jeweiligen Mobiltelefone 105 bzw. die jeweiligen Rechner 107a gesendet. Durch diese Daten wird dann veranlasst, dass gemäß Figur 6a, 6b am jeweiligen Display 118a, 118b entsprechende Nachrichten wie z.B. "100.000 Teilnehmer!" und/oder "200.000 EURO Gewinnsumme" angezeigt werden.

Unmittelbar nach der Ermittlung der jeweiligen Gewinner werden diese - wiederum veranlasst durch die in der Speichereinrichtung des Zentralrechners 117 abgespeicherte Steuerungssoftware - über die Tatsache benachrichtigt, dass sie als Gewinner ausgewählt wurden. Hierzu werden entsprechende Gewinn-Benachrichtigungsdaten vom Zentralrechner 117 an das dem jeweiligen Gewinner zugeordnete Mobiltelefon 105, bzw. den diesem zugeordneten Rechner 107a gesendet.

Durch diese Daten wird dann veranlasst, dass am jeweiligen Bildschirm bzw. Display 118a, 118b - z.B. durch Einblenden einer Nachricht "Gewinn!" - eine Gewinnbenachrichtigung angezeigt wird. Dabei wird dem jeweiligen Nutzer A zugleich auch die Höhe des jeweils erzielten Gewinns mitgeteilt (z.B. mit Hilfe der Nachricht "Sie haben 20.000 EURO gewonnen").

Eine entsprechende Nachricht wird auch an die anderen, teilnehmenden (und/oder alle oder einen Teil der potentiellen) Nutzer gesendet, z.B. in Form der Nachricht "Ein Mitspieler hat gerade 200.00 EURO gewonnen !".

Mit Hilfe der in der Speichereinrichtung des Zentralrechners 117 gespeicherten Daten kann - entsprechend wie beim ersten Ausführungsbeispiel - Marktforschung in Echtzeit betrieben werden. Beispielsweise kann die Erinnerbarkeit eines Produktnamens getestet werden, indem eine bestimmte Zeitdauer nach einer Werbesendung auf die o.g. Art diesbezügliche Fragen an die Mobiltelefone 105 bzw. die Rechner 107a der jeweiligen Nutzer A, B, C versendet werden. Die Beantwortung derartiger Fragen kann entsprechend der obigen Darstellung wiederum dadurch belohnt werden, dass entsprechende Gewinne ausgeschüttet werden.

Außerdem können - entsprechend wie beim ersten Ausführungsbeispiel - mit dem erfindungsgemäßen System 101 gegebene Kaufreize unmittelbar in Kaufhandlungen umgewandelt werden. Beispielsweise kann in Reaktion auf auf eine bestimmte Weise beantwortete Fragen zu einem bestimmten Produkt-Webespot ein Link zur entsprechenden Website des Produktsanbieters hergestellt werden, etc.

## Patentansprüche

1. Datenkommunikationssystem (1, 101), mit einer Vielzahl von Ausgabeeinrichtungen (5, 105), einer Vielzahl von einer Vielzahl verschiedener Nutzer (A, B, C) des Systems (1, 101) zugeordneten Eingabeeinrichtungen (2, 105), sowie mit mindestens einem zentralen Rechner (17, 117), wobei die Ausgabeeinrichtungen (5, 105) so ausgestaltet und eingerichtet sind, dass diese jeweils einander entsprechende Informationen ausgeben, und wobei der zentrale Rechner (17, 117) so ausgestaltet und eingerichtet ist, dass dieser den Informationen zugeordnete, weitere Informationen an die Ausgabeeinrichtungen (5, 105) oder an weitere Ausgabeeinrichtungen (2) versendet, die ebenfalls dort ausgegeben werden,
wobei die Eingabeeinrichtungen so ausgestaltet und eingerichtet sind, dass auf die weiteren Informationen bezogene, an den jeweiligen Eingabeeinrichtungen (2, 105) eingegebene Daten an den zentralen Rechner (17, 117) übermittelt werden, wobei der zentrale Rechner (17, 117) so ausgestaltet und eingerichtet ist, dass er in Reaktion auf die von den verschiedenen Eingabeeinrichtungen (2, 105) empfangenen Daunter der Vielzahl der verschiedenen Nutzer (A, B, C) einen der Nutzer (A), oder eine Teilmenge der Nutzer (A, B) auswählt
**dadurch gekennzeichnet, dass** der Rechner (17, 117) so ausgestaltet und eingerichtet ist, dass vom Rechner (17, 117) derjenige Nutzer (A) ausgewählt wird, bei dem die von der entsprechenden Eingabeeinrichtung (2, 105) übermittelten Daten am ähnlichsten zu im Rechner (17, 117) gespeicherten Referenz-Daten sind, wobei das System Mittel enthält zum Ermitteln der Referenz-Daten auf Grundlage der von den Nutzern übermittelten Daten.

2. Datenkommunikationssystem (1, 101) nach Anspruch 1, bei welchem der Rechner (17, 117) so ausgestaltet und eingerichtet ist, dass vom Rechner (17, 117) an den einen, ausgewählten Nutzer (A) eine Auswahl-Nachricht versendet wird.

3. Datenkommunikationssystem (1, 101) nach einem der vorhergehenden Ansprüche, bei welchem die Informationen einem bestimmten Produkt oder einer bestimmten Dienstleistung zugeordnete Werbeinformationen sind.

4. Datenkommunikationsverfahren, wobei an einer Vielzahl von Ausgabeeinrichtungen (5, 105) jeweils einander entsprechende Informationen ausgegeben werden, mindestens ein zentraler Rechner (17, 117) den Informationen zugeordnete, weitere Informationen an die Ausgabeeinrichtungen (5, 105) oder an weitere Ausgabeeinrichtungen (2) versendet, die ebenfalls dort ausgegeben werden, und wobei eine Vielzahl von einer Vielzahl verschiedener Nutzer (A, B, C) zugeordnete Eingabeeinrichtungen (2, 105) bereitgestellt werden,
wobei auf die weiteren Informationen bezogene, an den jeweiligen Eingabeeinrichtungen (2, 105) eingegebene Daten an den zentralen Rechner (17, 117) übermittelt werden, und der zentrale Rechner (17, 117) in Reaktion auf die von den verschiedenen Eingabeeinrichtungen (2, 105) empfangenen Daten unter der Vielzahl der verschiedenen Nutzer (A, B, C) einen der Nutzer (A), oder eine Teilmenge der Nutzer (A, B) auswählt,
**dadurch gekennzeichnet, dass** derjenige Nutzer (A) ausgewählt wird, bei dem die von der entsprechenden Eingabeeinrichtung (2, 105) übermittelten Daten am ähnlichsten zu im Rechner (17, 117) gespeicherten Referenz-Daten sind, wobei die Referenz-Daten auf Grundlage der von den Nutzern übermittelten Daten ermittelt werden.

## Claims

1. A data communication system (1, 101) comprising a plurality of output devices (5, 105), a plurality of input devices (2, 105) allocated to a plurality of different users (A, B, C) of the system (1, 101), and at least one host computer (17, 117), wherein said output devices (5, 105) are designed and configured such that they output information corresponding to each other, and wherein said host computer (17, 117) is designed and configured such that it sends to said output devices (5, 105) or to further output devices (2) further information allocated to said information, which is also output there,
wherein said input devices are designed and configured such that data relating to said further information and input into the respective input devices (2, 105) are transmitted to said host computer (17, 117), wherein said host computer (17, 117) is designed and configured such that it selects, in reaction to the data received from the different input devices (2, 105), one of the users (A) or a subset of users (A, B) among the plurality of different users (A, B, C),
**characterized in that** said computer (17, 117) is designed and configured such that said computer (17, 117) selects that user (A) with whom the data transmitted by the corresponding input device (2, 105) are most similar to the reference data stored in said computer (17, 117), wherein the system comprises devices for determining the reference data on the basis of the data transmitted by the users.

2. The data communication system (1, 101) according to claim 1, wherein said computer (17, 117) is designed and configured such that said computer (17, 117) sends a message of selection to the one, selected user (A).

3. The data communication system (1, 101) according to any of the preceding claims, wherein the information is advertising information allocated to a specific product or a specific service.

4. A data communication method, wherein, at a plurality of output devices (5, 105), information corresponding to each other is output, wherein at least one host computer (17, 117) sends to said output devices (5, 105) or to further output devices (2) further information allocated to said information, which is also output there, and wherein a plurality of input devices (2, 105) allocated to a plurality of different users (A, B, C) is provided,
wherein data relating to the further information and input into the respective input devices (2, 105) are transmitted to said host computer (17, 117) and said host computer (17, 117) selects, in reaction to the data received from the different input devices (2, 105), one of the users (A) or a subset of users (A, B) among the plurality of different users (A, B, C),
**characterized in that** t that user (A) is selected with whom the data transmitted by the corresponding input device (2, 105) are most similar to the reference data stored in said computer (17, 117), wherein the reference data are determined on the basis of the data transmitted by the users.

## Revendications

1. Système de communication de données (1, 101), comprenant une pluralité de dispositifs de sortie (5, 105), une pluralité de dispositifs d'entrée (2, 105) attribués à une pluralité de divers utilisateurs (A, B, C) du système (1, 101) ainsi qu'au moins un calculateur (17, 117) central, les dispositifs de sortie (5, 105) étant conçus et aménagés de telle sorte que ceux-ci sortent des informations qui se correspondent respectivement et le calculateur (17, 117) central étant conçu et aménagé de telle sorte que celui-ci envoie d'autres informations attribuées aux informations, aux dispositifs de sortie (5, 105) ou à d'autres dispositifs de sortie (2), qui sont également sorties à cet endroit,
les dispositifs d'entrée étant conçus et aménagés de telle sorte que des données spécifiques aux autres informations et entrées sur les dispositifs d'entrée (2, 105) respectifs sont transmises au calculateur (17, 117) central, le calculateur (17, 117) central étant conçu et aménagé de telle sorte qu'il choisit, en réaction aux données reçues des différents dispositifs d'entrée (2, 105), l'un des utilisateurs (A) ou une quantité partielle des utilisateurs (A, B) parmi la pluralité des divers utilisateurs (A, B, C),
**caractérisé en ce que** le calculateur (17, 117) est conçu et aménagé de telle sorte que le calculateur (17, 117) choisit l'utilisateur (A) pour lequel les données transmises par le dispositif d'entrée (2, 105) correspondant sont le plus identiques possibles aux données de référence enregistrées dans le calculateur (17, 117), le système contenant des moyens permettant de déterminer les données de référence sur la base des données transmises par les utilisateurs.

2. Système de communication de données (1, 101) selon la revendication 1, dans lequel le calculateur (17, 117) est conçu et aménagé de telle sorte que le calculateur (17, 117) envoie un message de choix à un utilisateur (A) choisi.

3. Système de communication de données (1, 101) selon l'une quelconque des revendications précédentes, dans lequel les informations sont des informations publicitaires attribuées à un produit défini ou à une prestation de service définie.

4. Système de communication de données, dans lequel des informations qui se correspondent à chaque fois sont sorties sur une pluralité de dispositifs de sortie (5, 105), au moins un calculateur (17, 117) central envoie d'autres informations attribuées aux informations, aux dispositifs de sortie (5, 105) ou à d'autres dispositifs de sortie (2), qui sont sorties également à cet endroit, et dans lequel une pluralité de dispositifs d'entrée (2, 105) attribués à une pluralité de divers utilisateurs (A, B, C) est mise à disposition,
dans lequel des données spécifiques aux autres informations et entrées sur les dispositifs d'entrée (2, 105) respectifs sont transmises au calculateur (17, 117) central, et le calculateur (17, 117) central choisit parmi la pluralité des divers utilisateurs (A, B, C), l'un des utilisateurs (A) ou une quantité partielle des utilisateurs (A, B) en réaction aux données reçues des différents dispositifs d'entrée (2, 105),
**caractérisé en ce qu'**on choisit l'utilisateur (A) pour lequel les données transmises par le dispositif d'entrée (2, 105) correspondant sont le plus identiques possibles aux données de référence enregistrées dans le calculateur (17, 117), les données de référence étant transmises sur la base des données transmises par les utilisateurs.
